# EUROPEAN PATENT SPECIFICATION

(11) **EP 0 378 521 B1**
(45) Date of publication and mention of the grant of the patent: **13.10.1993**
(21) Application number: 90850009.3
(22) Date of filing: 09.01.1990
(51) Int. Cl.: C02F 3/30

(54) **Water purification process**
Verfahren für die Wasserreinigung
Procédé pour l'épuration des eaux

(30) Priority: 11.01.1989 SE 8900071
(43) Date of publication of application: 18.07.1990
(73) Proprietor: KEMIRA KEMI AKTIEBOLAG, S-251 09 Helsingborg (SE)
(72) Inventor: Karlsson, Johan Lars Ingemar, S-181 47 Lidingö (SE)
(74) Representative: Inger, Lars Ulf Bosson

(56) References cited:
- EP-A- 0 220 142
- US-A- 3 586 625
- US-A- 3 939 068
- PATENT ABSTRACTS OF JAPAN, vol. 7, no. 171 (C-178), 28th July 1983; & JP-A-58 079 596 (EBARA INFILCO K.K.) 13-05-1983

## Description

The present invention relates to a process for the purification of water, in particular sewage water for the elimination of nitrogen comprising a nitrification and a denitrification step while simultaneously decomposing organic sludge removed from the sewage water.

The object of the present invention is to provide a water purification process of the above given kind, where the denitrification step is made more efficient by organic matter present in the sewage water.

In a chemical precipitation of sewage water using metal salts about 75% of the organic matter calculated as biological oxygen demanding matter (BOD) or chemical oxygen demanding matter (COD) can be removed. By using precipitation only most often only about 30% of the organic matter is removed. The reason is that when using precipitation only particles having a size of above 100 µm are removed. If chemical precipitation is introduced particles down to 0.1 µm can be removed. Organic matter being represented by particles of less than 0.1 µm and dissolved organic is influenced to a very little extent.

Subsequent to a precipitation step a biological purification step follows. If chemical precipitation is introduced the biological purification step is considerably discharged from organic matter. This discharge lowers the oxygen demand, but will also increase the possibilities to run the plant with oxidation of the nitrogen from ammonium to nitrate.

If a reduction of nitrate nitrogen should be desirable, this can be made biologically in a so called anoxic zone. This can be made in accordance with three main principles as pre-denitrification, as after-denitrification, or as simultaneous denitrification (incl. on-off-process).

A process of the kind given in the preamble is described in SE-B-8504289-3. This process comprises a chemical pre-precipitation using three and/or polyvalent metal salt for the pre-reduction of ingoing impurities, primarily of organic type. Then a biological purification using two processes is proposed. One of the process steps is nitrification, whereby ingoing ammonium nitrogen is being oxidized to nitrate. The second is denitrification, whereby nitrates are reduced to nitrogen gas using easily decomposable organic matter as a necessary source of carbon. Nitrogen gas can then be blown of to the atmosphere.

The two biological steps, the aerobic, and the anoxic one, are thereby carried out in any order as pre- or after-denitrification. Even a combination of these processes can be used as well as discontinous processes.

DE-A-3,310,572 discloses a 2-stage process for treating waste water biologically whereby in a lst step C-compounds are oxidized in an activation tank. The partly purified water is separated from activated sludge in an intermediate tank, whereupon denitrification takes place in a 2nd step in an anoxic zone using the waste water sludge as a reducing agent. Nitrification takes place in a further tank under O₂-rich conditions. In order to make it possible to use the organic matter of the sludge, i.e. to have easily available molecules, the sludge is being converted into organic acids under anaerobic conditions in a sludge treatment reactor to become activated. Hereby the waste water sludge used as a reducing agent contains a high concentration of easily degradable organic molecules, whereby low BOD and N₂ values in the effluent can be obtained.

US-A-3,586,625 discloses a complex method for purifying waste water from an oil industry, whereby the waste water is settled to produce a precipitated sludge, the water is freed from oil and oil-water emulsions and these are separated from each other, the oil being recovered, the waste water stream is then precipitated with alum and lime used as coagulants to produce a further sludge, whereupon the said latter sludge, and the oil-water emulsion are coked at 205-370°C (400 to 700°F) to produce carbon dioxide being used as a carbon source in the denitrification process.

If an after-denitrification is used, the micro-organisms are subject to anoxic conditions after the nitrification step, i.e., no aeration is made in this zone. The bacteria use nitrate which is reduced to nitrogen gas, as an electron acceptor in stead of oxygen. However, there has to be an electron donator (BOD or COD) present. All BOD is, however, consumed in the previous aeration step. To use an external BOD source will cost too much, and thus the original BOD contents of the sewage water is very interesting.

At conventional separation using precipitation about 30% of the organic matter is separated in the pre-precipitation basin.

The primary sludge will then consist of particles down to a size of 0.1 mm. This sludge has a very low suitability to bacterial oxidation, even if the total BOD-values can be considerable. The reason therefore is that the particulate material first has to be decomposed in an enzymatic process in order to finally be able to penetrate a bacterial cell membrane. Moreover, most often the precipitated organic part is insufficient to obtain a substantial reduction of nitrogen.

In its object of making the denitrification step more efficient the invention is characterized by the steps evident from the accompanying claims. Thus sludge or solutions of sludge of a chemical pre-precipitation of sewage water are used as a source of carbon in the denitrification step after a treatment step where the organic matter is converted to a biologically easily decomposable form, provided that pre-precipitation has been carried out using salts of aluminium, calcium, or iron or combinations of such, whereby the invention is characterixed in that a mixed salt of aluminium and iron or a salt of aluminium only is redissolved as a aluminate and is reused at an after-denitrification process in order to obtain a simultaneous precipitation of phosphorous.

The organic matter conversion step can comprise biological, aerobic anaerobic, enzymatic hydrolysis in combination with thermical, chemical and mechanical decomposition. The organic contents of a sewage water can mainly be divided into proteins, carbohydrates, and fats. The major part is represented by fats, about the half calculated as COD. An anaerobic hydrolysis of fats takes place very slowly in comparison to the hydrolysis of carbohydrates and proteins. At a simultaneous hydrolysis there is a great risk that the most easily hydrolysable products are lost in the form of methane gas and carbon dioxide. The fats can be treated chemically prior to or after a biological hydrolysis.

Preferably the sludge is treated with a combination of thermal decomposition at a temperature of 100-170°C, thus under pressure to avoid boiling off of water present, and an acid or alkaline hydrolysis using an inorganic strong acid, such as hydrochloric acid, or sulphuric acid when an acid hydrolysis is concerned, whereas the pH is about 2 or lower, or using lime or other basic agent when a alkaline hydrolysis is concerned. Preferably, this treatment is carried out at a pH exceeding 10. Lime, Ca(OH)₂, CaO, or caustic hydroxide NaOH or other bases are added to a suitable pH. Thereby up to 50% of the COD-contents of the sludge can be converted to a soluble form. The soluble form can be used directly, or via a hydrolysis as a source of carbon, electron donator, in a denitrification process.

The sludge phase can be subject to biological hydrolysis in order to increase the yield. Biological hydrolysis can also be a pretreatment step. In a chemical decomposition of a sewage water sludge precipitated by an aluminium based precipitation agent the aluminium compound can be redissolved at high pH-values as an aluminate and be re-used for reduction of phosphorous in an after-denitrification. Thereby the aluminium salt ought to be combined with an iron compound in the pre-precipitation, which iron salt binds the phosphorous as the iron phosphate compound can not be redissolved. The precipitation/coagulating chemicals from the chemical precipitation step, i.e., aluminium, and iron, will also become dissolved during an acid hydrolysis and will thus be recovered. Thereby half the amount of coagulating chemicals can be re-used.

Most preferably the treatment of the biological sludge is carried at a temperature of 150°C at a pressure of about 6 bars absolute pressure during less than 1 hr. The reject water obtained following a subsequent acid hydrolysis at pH 1 is an excellent source of carbon equivalent to methanol and starch. The residual contents after hydrolysis will readily precipitate like ashes.

The present method also provides excellent precipitation characteristics in the following steps.

At a pre-denitrification the source of carbon obtained can be used in combination with the easily available organic substance remaining in the sewage water.

The source of carbon produced in accordance with the present process can also be added to the return sludge before this being returned to the bioprocess. Thereby the high concentration of active sludge is utilized.

## Claims

1. Process for the purification of water, in particular sewage water, comprising a nitrification process and a denitrification process under simultaneous decomposition of a pre-precipitated sludge of sewage water, whereby sludge or solutions of sludge from a chemical pre-precipitation of sewage water is added as a source of carbon to the denitrification process, whereby this sludge has been pre-treated mechanically, enzymatically, thermally, biologically, or chemically, or by a combination of these methods in order to increase its suitability to bacterial oxidation, and whereby the chemical pre-precipitation is carried out using salts of aluminium, calcium, or iron, or combinations of these, **characterized** in that a mixed salt of aluminium and iron or a salt of aluminium only is redissolved as a aluminate and is reused at an after-denitrification process in order to obtain a simultaneous precipitation of phosphorous.

2. Process according to claim 1, **characterized** in that the sludge is pre-treated chemically by hydrolysis or decomposition, optionally after a biological hydrolysis.

3. Process according to claim 2, **characterized** in that the sludge is pre-treated thermally at a temperature of between 100-170°C for 1 hr during simultaneous acid or alkaline hydrolysis

4. Process according to claim 3, **characterized** in that the acid hydrolysis takes place using an inorganic acid, selected from the group consisting of hydrochloric acid and sulphuric acid, at a pH of less than 2.

5. Process according to claim 3, **characterized** in that the hydrolysis takes place using an alkaline hydrolysis by adding an alkaline agent selected from the group consisting of lime, Ca(OH)₂, CaO, NaOH at a pH of at least 10.

6. Process according to claim 5, **characterized** in that Ca(OH) ₂ or NaOH are added to a desired pH.

## Patentansprüche

1. Verfahren zur Reinigung von Wasser, insbesondere von Abwasser, mit einem Nitrifikationsverfahren und einem Denitrifikationsverfahren unter gleichzeitiger Zersetzung eines vorausgefällten Abwasserschlammes, wobei Schlamm oder Schlammlösungen aus einer chemischen Vorausfällung von Abwasser als eine Kohlenstoffquelle zu dem Denitrifikationsverfahren zugegeben werden, wobei dieser Schlamm mechanisch, enzymatisch, thermisch, biologisch oder chemisch oder durch eine Kombination dieser Methoden vorbehandelt wurde, um seine Eignung für bakterielle Oxidation zu steigern, und wobei die chemische Vorausfällung unter Verwendung von Aluminium-, Calcium- oder Eisensalzen oder Kombinationen derselben durchgeführt wird, dadurch gekennzeichnet, daß ein Mischsalz von Aluminium und Eisen oder nur ein Aluminiumsalz als ein Aluminat wieder aufgelöst wird und in einem Nachdenitrifikationsverfahren wiederverwendet wird, um eine gleichzeitige Phosphorausfällung zu bekommen.

2. Verfahren nach Anspruch 1, dadurch gekennzeichnet, daß der Schlamm chemisch durch Hydrolyse oder Zersetzung, gegebenenfalls nach einer biologischen Hydrolyse, vorbehandelt wird.

3. Verfahren nach Anspruch 2, dadurch gekennzeichnet, daß der Schlamm thermisch bei einer Temperatur zwischen 100 und 170°C während einer Stunde unter gleichzeitiger saurer oder alkalischer Hydrolyse vorbehandelt wird.

4. Verfahren nach Anspruch 3, dadurch gekennzeichnet, daß die saure Hydrolyse unter Verwendung einer anorganischen Säure, die aus der Gruppe Chlorwasserstoffsäure und Schwefelsäure ausgewählt wird, bei einem pH-Wert geringer als 2 stattfindet.

5. Verfahren nach Anspruch 3, dadurch gekennzeichnet, daß die Hydrolyse unter Verwendung einer alkalischen Hydrolyse durch Zugabe eines alkalischen Mittels, das aus der Gruppe Kalk, Ca(OH)₂, CaO, NaOH, bei einem pH-Wert von wenigstens 10 stattfindet.

6. Verfahren nach Anspruch 5, dadurch gekennzeichnet, daß Ca(OH)₂ oder NaOH bis zu einem erwünschten pH-Wert zugegeben werden.

## Revendications

1. Procédé pour la purification d'eaux, en particulier d'eaux usées, comprenant un procédé de nitrification et un procédé de dénitrification sous une décomposition simultanée d'une boue d'eaux usées précipitée préalablement, dans lequel une boue ou des solutions de boue provenant d'une précipitation préalable chimique d'eaux usées sont ajoutées comme source de carbone au procédé de dénitrification, dans lequel cette boue a été préalablement traitée mécaniquement, enzymatiquement, thermiquement, biologiquement ou chimiquement ou par une combinaison de ces méthodes afin d'accroître son adaptabilité à l'oxydation bactérienne, et dans lequel la précipitation préalable chimique est réalisée en utilisant des sels d'aluminium, de calcium ou de fer ou des combinaisons de ceux-ci, caractérisé en ce qu'un sel mixte d'aluminium et de fer ou un sel d'aluminium uniquement est redissous sous la forme d'aluminate et est réutilisé lors d'un procédé de post-dénitrification afin d'obtenir une précipitation simultanée de phosphore.

2. Procédé suivant la revendication 1, caractérisé en ce que la boue est prétraitée chimiquement par hydrolyse ou décomposition, éventuellement après une hydrolyse biologique.

3. Procédé suivant la revendication 2, caractérisé en ce que la boue est prétraitée thermiquement à une température entre 100 et 170°C pendant une heure au cours d'une hydrolyse acide ou alcaline simultanée.

4. Procédé suivant la revendication 3, caractérisé en ce que l'hydrolyse acide se produit en utilisant un acide inorganique, choisi dans le groupe comprenant l'acide chlorhydrique et l'acide sulfurique, à un pH inférieur à 2.

5. Procédé suivant la revendication 3, caractérisé en ce que l'hydrolyse se produit en utilisant une hydrolyse alcaline par l'addition d'un agent alcalin choisi dans le groupe comprenant la chaux, Ca(OH)₂, CaO et NaOH à un pH d'au moins 10.

6. Procédé suivant la revendication 5, caractérisé en ce que l'on ajoute du Ca(OH)₂ ou NaOH jusqu'à un pH désiré.
